Europäisches Patentamt

(19) European Patent Office

Office européen des brevets

(11) EP 0 744 736 A2

## (12) EUROPEAN PATENT APPLICATION

(43) Date of publication:
27.11.1996 Bulletin 1996/48

(51) Int. Cl.⁶: $G11B\ 5/024$, $G11B\ 5/54$, $G11B\ 15/12$, $G11B\ 5/325$

(21) Application number: 96106357.5

(22) Date of filing: 23.04.1996

(84) Designated Contracting States:
DE FR GB

(30) Priority: 24.05.1995 US 449053

(71) Applicant: EASTMAN KODAK COMPANY
Rochester, New York 14650 (US)

(72) Inventor: Jagielinski, Tomasz Marek,
c/o Eastman Kodak Co.
Rochester, New York 14650-2201 (US)

(74) Representative: Schmidt, Peter, Dipl.-Ing. et al
KODAK Aktiengesellschaft
Patentabteilung
70323 Stuttgart (DE)

### (54) Permanent magnetic erase head assembly

(57) An erase head assembly for high speed and density, precision magnetic tape data storage systems movable into and out of an erase/record position without affecting the tape transport path. A cylindrical drum having an axis of rotation and a peripheral, tape bearing, curved surface of a width sufficient to bear against and make intimate contact across the width of the magnetic tape is provided in the tape transport path. The permanent magnet erase head is mounted within the drum adjacent a first portion of the peripheral curved surface, the magnetic erase head providing a permanent magnetic erase field extending outside the first portion of the peripheral surface and across the width thereof. The drum is rotated between a first rotational position, wherein the permanent magnet erase head is positioned in the tape transport path to effect erasure of the magnetic tape, and a second rotational position, wherein the permanent magnet erase head is rotated out of the tape transport path and distanced therefrom sufficiently to prevent erasure of the magnetic tape to allow magnetic tape transport without erasure. The permanent magnet erase head assembly is preferably formed of an array of an odd number of alternatingly polarized permanent magnets of substantially equal thickness having terminators sandwiching the array therebetween for suppressing respective portions of the fields associated with the adjacent leading and trailing permanent magnets in the array.

FIG. 4

**Description**

FIELD OF THE INVENTION

The present invention relates to the field of magnetic tape recording and reproduction and particularly to erase head assemblies for high speed and density, precision magnetic tape data storage systems.

BACKGROUND OF THE INVENTION

Magnetic digital data tape storage systems are widely employed for backing up computer data and software primarily stored on the disk drive or for other storage of digitized and coded data for security or transport. Such tape systems operate at high speeds and densities and provide storage limited only by the tape size and length.

In high density, high speed digital recording, it is desirable to erase previously recorded media, e.g. tape, before writing with new information. It is particularly important when high coercivity tape is used to record information. In this case, the overwrite process (recording over previously recorded information) retires a large field to be supplied by the record head which may be difficult to provide. The simplest and most economical approach is to use a separate erase head.

A fundamental practice employed in the erasing recorded information or data from a magnetic tape is to subject the moving tape to an alternating field of gradually diminishing strength as it passes by the erase head. The alternating field can be generated by an active erase head, but a passive, permanent magnet erase head is often preferred for meeting the size and strength demands of the required erase field and for energy conservation reasons.

For example, erasure of information from a magnetic tape is accomplished preferably by using a permanent magnetic erase head of the type shown in the commonly assigned U.S. Patent No. 4,893,208 to McClure. The magnetic erase head shown 12 in Figure 1 (corresponding to Figure 5 of the '208 patent) is formed of an odd number of thin polarized magnets 10a, 10b, . . . 10n stacked together with alternating polarity in an elongated array. Magnetic terminators 16a and 16b sandwich the ends of the array and may comprise permanent magnets of a fraction (e.g. 50%) of the thickness of the array magnets 10a, 10b, . . . 10n. This array structure creates the field of alternating polarity extending along the array while precluding the generation of a longitudinal DC magnetic field extending from one end to the other end of the array, which would exist if the terminators 16a, 16b were not present. Fields are generated at each adjacent change in permanent magnet polarity along the stack that can be directed into the magnetic tape 20 by placing the array alongside the tape 20.

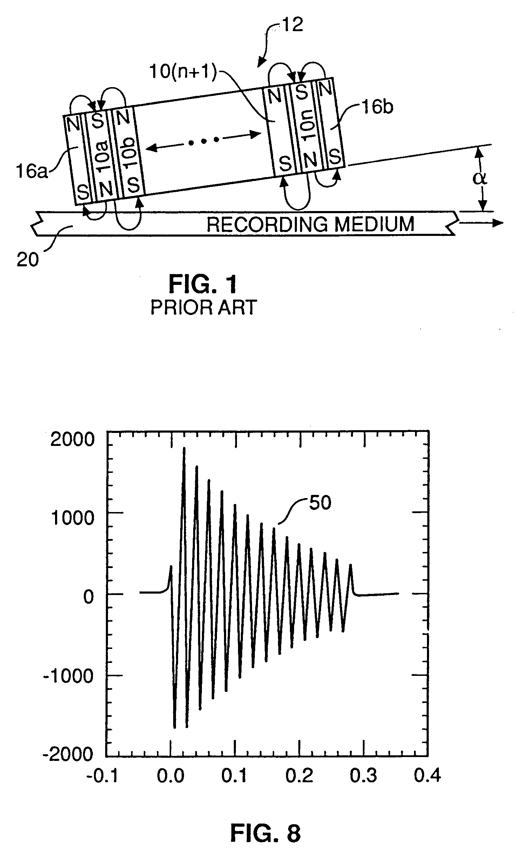

In order to create the gradually decreasing field strength as the tape 20 is advanced with respect to the head 12 from left to right as shown, the magnetic head 12 is mounted at an angle $\alpha$ to the tape 20 as shown in Figure 1. The displacement of the right end of the erase head 12 away from the tape causes the magnetic field strength to progressively decrease at the media or tape plane from the left to the right. The field at the right end from magnets 10n to 10(n-1) becomes essentially parallel to the tape 20.

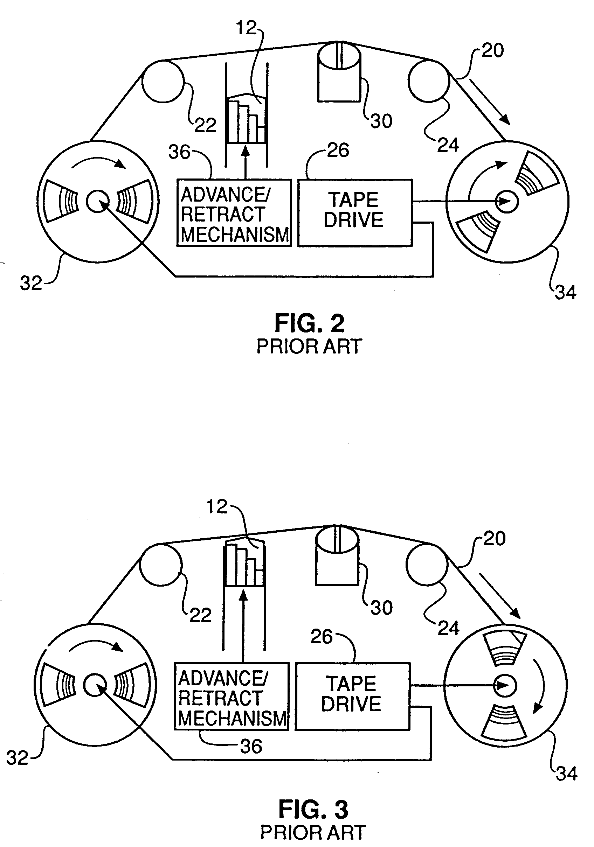

Since the permanent magnetic field cannot be turned off, the above-referenced system employs a mechanism to advance and retract the erase head 12 from the media or tape transport path. Figures 2 and 3 are schematic illustrations of the reproduce and erase/record positions, respectively, of the magnetic erase head 12 and the record/reproduce head system 30 in relation to the tape 20. It will be understood that the schematically depicted system of Figures 2 and 3 is illustrative of components of a linear recording tape drive system commonly employed in instrumentation data or audio tape drives with a stationary erase head 12 and record/reproduce head system 30. The depicted system is also representative of a rotary tape drive system commonly employed in video tape drives with the record/reproduce head system 30 comprising two or more record/reproduce heads mounted on a rotating drum with respect to video tape wrapped and advanced in a path about the drum in a manner well known in the art.

The magnetic tape 20 is advanced from left to right in a forward direction from a supply reel 32 to a take-up reel 34 over guide rollers 22 and 24 and the record/reproduce head system 30 during the erase/record and reproduce operations. In this forward direction, as well as a reverse or rewind direction, the supply reel 32 and take-up reel 34 are driven by a tape drive motor system 26. The tape drive could alternately be effected employing a capstan and pinch roller drive system as is well known in the art.

The cylindrical head surface contour of the record/reproduce head system 30 is positioned in the tape transport path so that a high degree of compliance is achieved with the magnetic tape 20 when it is threaded through the tape transport path. In the erase/record position of Figure 3, the permanent magnet erase head 12 is moved from the retracted position of Figure 2 to an advanced position by advance/retract mechanism 36, whereby it is inserted into the tape transport path and deflects the tape 20 over its contoured surface. This deflection is necessary in order to achieve a high enough compliance of the tape 20 against the surface of erase head 12 to ensure that complete erasure of the previously recorded data takes place, and that the recorded data code is not compromised.

In every magnetic tape recording system, the head performance depends on characteristics of the magnetic head and the head/tape interface. The head/tape interface is influenced by a number of factors, the most important being the head contour. The head contour must be optimized to the type of magnetic tape used in the system and the tape transport path over or in relation to the head contour. These general considerations apply to the head surface contours of the magnetic record/reproduce head system 30 and to the magnetic erase head 12 as described above. This requires that the magnetic head 12 have a somewhat cylindrical surface (while preserving the angle $\alpha$, of the magnet array of Figure 1) so that the tape wraps about the cylindrical surface of the erase head 12 to a degree sufficient to substantially eliminate the head/tape spacing to below 1 micrometer.

The same high compliance and spacing constraints apply to the interface of the gap of the record/reproduce head system 30 with the magnetic tape 20. Given the system size constraints and spacing apart of the erase head 12, record/reproduce head system 30, and the guide rollers 24 and 26, the insertion of the erase head 12 into the tape transport path causes a disturbance in tape tension and may cause a spacing change to occur at the record/reproduce head/tape interface. In a system where the tape is moving at high speed, the change in the transport path cam create a mechanical wave disturbance in the tape which adds to the spacing when the wave reaches the record/reproduce head system 30. The constant or wave spacing change introduces losses in the recorded signal according to the formula, Losses = 33 $\delta/\lambda$, where $\delta$ is the instantaneous spacing and $\lambda$ is the wavelength of the recorded signal. The losses cause deterioration in the coded data or other information recorded by the record/reproduce head system 30.

Problem to be Solved by the Invention

The above described deficiencies in the prior art erase heads lead to problems in accurately recording information that require a solution without resorting to the use of active magnetic erase heads.

SUMMARY OF THE INVENTION

It is therefore an object of the present invention to provide an improved permanent magnet erase head for magnetic tape recording systems that does not cause a disturbance in the tape transport path on movement of the permanent magnet erase head into proximity to the tape.

In accordance with the present invention, a permanent magnet erase head assembly for erasing magnetic tape advanced through a tape transport path comprises: tape guide means within the tape transport path including a cylindrical drum having an axis of rotation and a peripheral, tape bearing, curved surface of a width sufficient to bear against and make intimate contact across the width of the magnetic tape; a tape advancement mechanism for advancing magnetic tape through the tape transport path and over the tape guides and around a portion of the peripheral curved surface; means for mounting the permanent magnet erase head within the drum adjacent a first portion of the peripheral curved surface, the magnetic erase head providing a permanent magnetic erase field extending outside the first portion of the peripheral surface and across the width thereof; means for supporting the drum for rotational movement about the drum axis without disturbing the tape transport path; means for rotating the drum between a first rotational position, wherein the permanent magnet erase head is positioned in the tape transport path to effect erasure of the magnetic tape, and a second rotational position, wherein the permanent magnet erase head is rotated out of the tape transport path and distanced therefrom sufficiently to prevent erasure of the magnetic tape to allow magnetic tape transport without erasure.

Preferably the permanent magnet erase head assembly is formed of an array of an odd number of alternatingly polarized permanent magnets of substantially equal thickness having terminators sandwiching the array therebetween for suppressing respective portions of the fields associated with the adjacent leading and trailing permanent magnets in the array.

Advantageous Effects of the Invention

The present invention allows for the use of the permanent magnet erase head while eliminating the tape disturbance and simplifying the moving parts. The permanent magnet erase head advantageously does not draw current and can be miniaturized considerably due to the ability to rotate it into and out of the erase or erase/record position.

BRIEF DESCRIPTION OF THE DRAWINGS

These and other objects, advantages and features of the invention will be become apparent from the detailed description given hereinafter in relation to the accompanying drawings, in which:

Figure 1 is a schematic illustration of a prior art permanent magnet erase head structure in relation to magnetic tape;
Figure 2 is a schematic illustration of an exemplary prior art tape transport system in relation to a permanent magnet erase head of the type shown in Figure 1 in a reproduce position;
Figure 3 is a schematic illustration of the exemplary prior art tape transport system in relation to the permanent magnet erase head in an erase/record position;
Figure 4 is a schematic illustration of a tape transport path in relation to a permanent magnet erase head and rotatable drum of the present invention in a reproduce/rewind position;
Figure 5 is a schematic illustration of a tape transport path in relation to a permanent magnet erase head and rotatable drum of the present invention in an erase/record position;

Figure 6 is a schematic illustration of the magnetic field strength of the erase head mounted in the rotatable drum in relation to the tape transport path in the erase/record position of Figure 5;

Figure 7 is a schematic illustration of the magnetic field strength of the erase head mounted in the rotatable drum in relation to the tape transport path in the reproduce/rewind position of Figure 4; and

Figure 8 is a graphical depiction of the field strength compared to the spacing of the array of magnets of the permanent magnet erase head in accordance with the invention between.

The drawings are not necessarily to scale.

## DETAILED DESCRIPTION OF THE PREFERRED EMBODIMENTS OF THE INVENTION

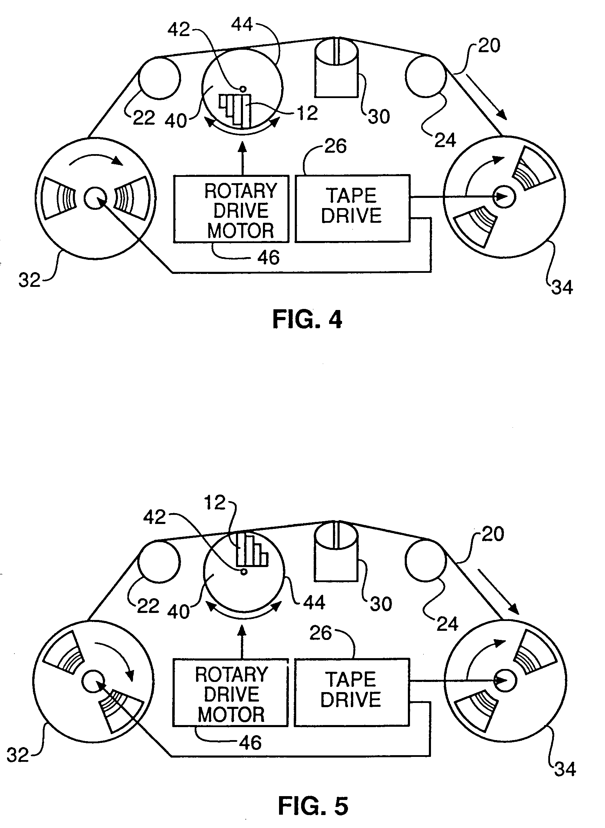

Turning to Figures 4 and 5, the system of the present invention involves the mounting of the permanent magnet erase head 12 in a head assembly for erasing the magnetic tape 20 advanced through the tape transport path that does not change the penetration into the tape transport path or disturb the tape when the erase head is moved to the erase/record position of Figure 5. This is accomplished by providing tape guide means within the tape transport path including a cylindrical drum 40 having an axis of rotation 42 and a peripheral, tape bearing, curved surface 44 of a width sufficient to bear against and make intimate contact across the width of the magnetic tape 20. The tape advancement mechanism for advancing the magnetic tape 20 through the tape transport path advances it over a minor arc section or portion of the peripheral curved surface 44 in both the reproduce and erase/record operations and positions of Figures 4 and 5, respectively.

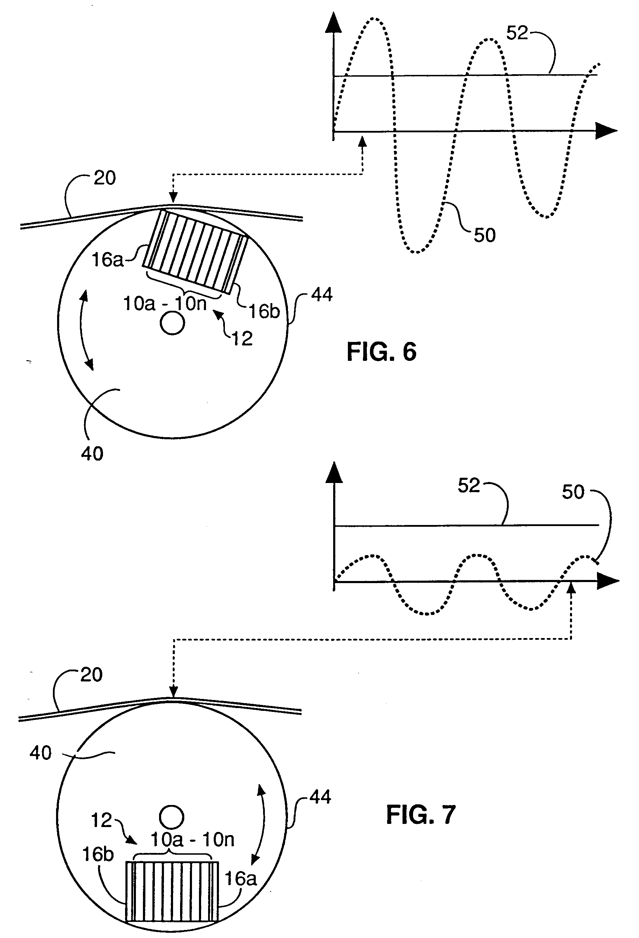

The permanent magnet erase head 12 is mounted within the drum 40 adjacent a first portion of the peripheral curved surface 44. The magnetic erase head 12 is preferably formed in the same fashion as described above with respect to the `208 patent, in an array of an odd number of alternatingly polarized permanent magnets of substantially equal thickness having terminators sandwiching the array therebetween for suppressing respective portions of the magnetic fields associated with the adjacent leading and trailing permanent magnets. The terminators preferably comprise first and second permanent magnets oppositely polarized to the respective leading and trailing permanent magnets in the array and having a thickness less than the thickness of said permanent magnets. The magnetic erase head 12 is depicted schematically in Figures 4 and 5, and it will be understood that it may be formed in the same manner as described in the `208 patent to assume either the straight array of Figure 1 or arrays having a straight side and a staggered side as shown in Figures 4 and 5. The straight array shown in Figure 1 may be preferred because it is easier to fabricate and to then mount in a drum 40 as shown in Figures 6 and 7.

The drum 40 is supported on its axis 42 for rotation by a drive motor 46 for rotational movement about the drum axis 42 without disturbing the tape transport path. In a first rotational, erase position depicted in Figure 5, the permanent magnet erase head 12 is positioned in the relation to the tape transport path to effect erasure of the magnetic tape 20. In the second rotational position of Figure 4, the permanent magnet erase head 12 is rotated out of the tape transport path and distanced therefrom sufficiently by the diameter of the drum 40 to prevent erasure of the magnetic tape 20 to thereby allow magnetic tape transport without erasure. The drum 40 is in the second rotational position during the rewind operation and the reproduce operation.

In the erase position of Figure 5, the magnetic erase head 12 provides a permanent magnetic erase field extending outside the first portion of the peripheral curved surface 44 and across the width thereof, corresponding to the width of the magnetic tape 20. The angle $\alpha$ (Figure 1) to the tape 20 is achieved by the relationship between the length of the erase head 12 array and the drum 40 radius as well as the tape transport path.

The rotation of drum 40 by rotary drive motor 46 from the second position to the erase position thereby positions the permanent magnet erase head 12 into erase relationship with respect to the tape 20 described with reference to Figure 1 without disturbing the tape transport path. This ensures that the precise alignment of the tape 20 with respect to the record/reproduce head system 30 is not changed during the erase/record and the reproduce operations.

The minor arc section or portion of the peripheral curved surface 44 that the tape 20 is wrapped over in the erase/record and reproduce positions may be selected as a function of the spacing between the tape 20 and the array of magnets making up the erase head 12 that is sufficient to ensure that the erase function is accomplished. The size of the magnetic head 12 and the drum 40 dictate the spacing to some extent.

Figures 6 and 7 depict schematically how the alternating magnetic field strength 50 generated by the alternating magnetic poles of the array measured at the magnetic tape 20 plane diminishes. In Figure 6, the drum 40 is rotated into the erase/record position in proximity with the transport path of magnetic tape 20. In Figure 7, the drum 40 is rotated into the reproduce position away from the plane of the magnetic tape 20. In each case, the magnetic field wave form is simplified for purposes of illustration of the operation of the erase head 12.

As shown in Figure 6, the magnetic field strength 50 diminishes from left to right with respect to the threshold 52 for erasing the magnetic tape 20. The declining magnetic field is effected by the increasing spacing between the magnets 10a - 10n and the tape 20 from left to right, emulating the angle $\alpha$ to the tape 20 as shown in Figure 1. The radius of the drum 40 may be selected to be large enough to support the magnetic erase head 12 and to provide a sufficient wrap of the tape 20 over a segment of its circumference 44 to achieve erasure in the Figure 6 position.

In Figure 7, the permanent magnet array erase head 12 is rotated to the erase position so that it is generally parallel with the tape transport path and spaced therefrom by a distance exceeding the drum 40 radius. The distance is such that the measurable field strength 50 (exaggerated in Figure 7) along the tape transport path is well below the threshold 52.

Turning to Figure 8, it is a more detailed graphical depiction of the field strength 50 compared to the spacing of the array of magnets of the permanent magnet erase head 12 employed in the rotatable drum 40 in accordance with the invention. Figure 8 represents the field strength 50 of an erase head 12 comprising an odd number, e.g. 25, alternately polarized magnets 10 of a 100 mil height. Each magnet is 10 mils thick, with the terminators 16a and 16b each 5 mils thick. The field strength 50 is depicted at 1 mil spacing from the tape 20 at the left, with the spacing increasing with $\alpha$ to 30 mils. The field strength 50 at 1 mil is well above the 150 Oe necessary to erase, and diminishes as the spacing increases to 30 mils where it falls below that necessary to erase the magnetic tape.

The particular shape and size of the magnetic head 12 and drum 40 may vary from that depicted and described above, depending on the intended application. Moreover, it will be understood that the peripheral surface 44 of the drum 40 may be stationary, and the erase head 12 may be rotated within it between the positions of Figures 4 and 5. The peripheral surface 44 may alternatively be supported on drum axle 42 to rotate freely, and the erase head 12 may be rotated within it between the positions of Figures 4 and 5.

Although the present invention has been fully described with reference to the preferred embodiments thereof, many modifications and variations thereof will be apparent to those skilled in the art without departing from the scope of the invention as claimed.

PARTS LISTS FOR FIGS. 1-8

    thin polarized magnets 10a, 10b, . . . 10n
    magnetic erase head shown 12
    magnetic terminators 16a and 16b
    magnetic tape 20
    guide rollers 22 and 24
    tape drive motor system 26
    record/reproduce head system 30
    supply reel 32
    take-up reel 34
    advance/retract mechanism 36
    cylindrical drum 40
    axis of rotation 42
    peripheral, tape bearing, curved surface 44
    rotary drive motor 46

    magnetic field strength 50
    erase threshold 52

## Claims

1. A permanent magnet erase head assembly for erasing magnetic tape advanced through a tape transport path comprising:

    tape guide means within said tape transport path including a cylindrical drum having an axis of rotation and a peripheral, tape bearing, curved surface of a width sufficient to bear against and make intimate contact across the width of said magnetic tape;
    tape advancement means for advancing magnetic tape through said tape transport path and over said tape guide means and around a portion of said peripheral curved surface;
    means for mounting said permanent magnet erase head within said drum adjacent a first portion of said peripheral curved surface, said magnetic erase head providing a permanent magnetic erase field extending outside said first portion of said peripheral surface and across the width thereof;
    means for supporting said drum for rotational movement about said drum axis without disturbing said tape transport path;
    means for rotating said drum between a first rotational position, wherein said permanent magnet erase head is positioned in said tape transport path to effect erasure of said magnetic tape, and a second rotational position, wherein said permanent magnet erase head is rotated out of said tape transport path and distanced therefrom sufficiently to prevent erasure of said magnetic tape to allow magnetic tape transport over the drum without erasure taking place.

2. The permanent magnet erase head assembly of Claim 1 wherein said erase head is formed of an array of an odd number of alternatingly polarized permanent magnets of substantially equal thickness having terminator means sandwiching said array therebetween for suppressing respective portions of the fields associated with the adjacent leading and trailing permanent magnets in the array.

3. The permanent magnet erase head assembly of Claim 2 wherein said terminator means comprise first and second permanent magnets oppositely polarized to the respective leading and trailing permanent magnets in said array and having a thickness less than said thickness of said permanent magnets.

4.  The permanent magnet erase head assembly of Claim 3 wherein:

said permanent magnet array has a field width sufficient to provide a permanent magnetic erase field extending across the width of said magnetic tape and a field length; and
said permanent magnet mounting means further comprises means for mounting said permanent magnet array sandwiched by said terminator means to at a skewed angle to said first portion of said peripheral curved surface, such that said magnetic erase head provides a permanent magnetic erase field of even magnetic field intensity across the magnetic tape width and uneven magnetic field intensity in the length dimension of the segment of the magnetic tape bearing against the portion of the peripheral curved surface of said drum.

## FIG. 1
PRIOR ART

## FIG. 8

**FIG. 2**
PRIOR ART

**FIG. 3**
PRIOR ART

**FIG. 4**

**FIG. 5**

FIG. 6

FIG. 7

10